# EUROPÄISCHE PATENTSCHRIFT

(11) **EP 0 807 031 B1**
(45) Veröffentlichungstag und Bekanntmachung des Hinweises auf die Patenterteilung: **09.02.2000**
(21) Anmeldenummer: 96901719.3
(22) Anmeldetag: 05.02.1996
(51) Int. Cl.: B60N 2/16, B60N 2/44

(54) **BEIDSEITIG WIRKENDER MANUELLER ANTRIEB ZUR ERZEUGUNG EINER DREHBEWEGUNG**
BI-DIRECTIONAL MANUAL DRIVE FOR GENERATING A ROTARY MOTION
MECANISME MANUEL D'ENTRAINEMENT BIDIRECTIONNEL SERVANT A GENERER UN MOUVEMENT DE ROTATION

(30) Priorität: 03.02.1995 DE 19503505; 29.07.1995 DE 19527912
(43) Veröffentlichungstag der Anmeldung: 19.11.1997
(73) Patentinhaber: Brose Fahrzeugteile GmbH & Co. KG, 96450 Coburg (DE)
(72) Erfinder: MINKENBERG, Andreas, D-96450 Coburg (DE); SCHUMANN, Peter, D-96253 Untersiemau (DE); FISCHER, Markus, D-96450 Coburg (DE); FORKEL, Michael, D-96450 Coburg (DE)
(74) Vertreter: Müller, Wolfram Hubertus, Dipl.-Phys.
(86) Internationale Anmeldenummer: DE9600211
(87) Internationale Veröffentlichungsnummer: WO9623672

(56) Entgegenhaltungen:
- EP-A- 0 505 090
- DE-A- 3 608 858
- DE-A- 4 120 617
- DE-A- 4 123 103
- US-A- 4 903 931
- US-A- 5 007 611

## Beschreibung

Die Erfindung bezieht sich auf einen beidseitig wirkenden, manuellen Antrieb zur Erzeugung einer Drehbewegung und ist besonders vorteilhaft in Verstellsystemen von Kraftfahrzeugsitzen anwendbar. Sie zeichnet sich durch eine feinstufige und geräuscharme Funktionsweise aus.

Ein gattungsgemäßer Verstellantrieb, der insbesondere als Gelenkbeschlag für eine Sitzhöhen- oder Rückenlehnenneigungsverstellung in Kraftfahrzeugsitzen Verwendung finden soll, ist gemäß DE 36 08 85 8 A1 bekannt. Danach ist eine mit einem Drehgelenk verbundene Welle in einem Gestell gelagert. Die Verstellung erfolgt über ein verzahntes Stellrad und einen Betätigungsarm mit zwei hebelartigen Mitnehmern. An der zylindrischen Innenfläche einer Aufnahmebuchse liegen zwei Schraubenfedern unter Eigenspannung an. Mit der Aufnahmebuchse verbunden ist ein mit Mitnehmerzähnen versehenes Stellrad, dem die hebelartigen Mitnehmer des Betätigungsarms zugeordnet sind. Die gegensinnig angeordneten Schraubenfedern liegen mit jeweils einem Endbereich an dem Ende einer in die Aufnahmebuchse ragenden Welle und mit dem jeweils anderen Endbereich in der Nähe eines mit dem Stellrad verbundenen Anschlags beidseitig mit Spiel an. Bei der Schwenkbewegung des Betätigungsarms wird die je nach Drehrichtung sperrende Schraubenfeder durch das Auflaufen eines Anschlags gesperrt, so daß die Schwenkbewegung in eine Drehbewegung umgewandelt werden kann. Durch eine separate Feder und einen Anschlag werden die beiden Mitnehmer derart geschaltet, daß je nach Schwenkrichtung des Betätigungsarms der eine oder andere Mitnehmer mit einem Mitnehmerzahn des Stellrades in Eingriff gelangt.

Bei diesem Gelenkbeschlag ist der Abstand der Mitnehmerzähne voneinander so groß, daß beim Schalten eine verhältnismäßig große Winkelstrecke zum Aufholen des Leerganges durchfahren werden muß. Eine feinstufige Verstellung eines Sitzes ist somit nicht möglich. Ein weiterer Nachteil des Verstellantriebes besteht darin, daß die Mitnehmer über die äußere Kontur des Stellrades hinausragen und somit den Bauraum vergrößern. Entsprechend groß muß das Gehäuse für den Verstellantrieb ausgelegt werden.

Desweiteren sind als Ratschen bezeichnete Antriebe bekannt, deren schwenkbare Rastelemente vergleichsweise feine Verzahnungen tragen. Die Verzahnung der Rastelemente wird durch eine Feder permanent mit der Gegenverzahnung des Antriebes in Eingriff gehalten. Von Nachteil ist jedoch, daß der rückführende Leerhub des Antriebes zu Geräuschen führt, weil die Verzahnungen von Rastelement und Antriebsrad aufeinander gleiten.

Die US-A-4,903,931 offenbart einen manuellen Antrieb für einen Fahrzeugsitz, bei dem eine über einen Antriebshebel ausgeübte Verstellkraft über Rastklinken auf ein Zahnelement bzw. eine mit dem Zahnelement verbundene Antriebsachse übertragen wird. Die Rastklinken sind dabei schwenkbar in einem um die Antriebsachse schwenkbaren Gehäuse angeordnet. Jeder Rastklinke ist eine Feder zugeordnet, die jeweils eine Rastklinke in Anlage an das Zahnelement bringt. Damit bei einer Auf- bzw. Abwärtsbewegung des Antriebshebels immer nur eine Rastklinke in Eingriff mit dem Zahnelement steht, ist ein mit einem Umschalthebel verbundener Nocken vorgesehen, der je nach Stellung jeweils eine Rastklinke vom Zahnelement wegdrückt. Zur Umkehr der Verstellrichtung muß der Umschalthebel manuell umgelegt werden.

Der Erfindung liegt deshalb die Aufgabe zur Entwicklung eines beidseitig wirkenden, manuellen Antriebes zur Erzeugung einer Drehbewegung zugrunde, der unter Verwendung von Formschlußelementen eine sehr feinstufige Verstellung erlaubt und gleichzeitig Geräusche, insbesondere sogenannte Ratschengeräusche, vermeidet. Ein merklicher Leerhub durch den Antriebshebel soll praktisch ausgeschlossen werden.

Andererseits soll ein Antrieb entwickelt werden, dessen hebelartige, auf dem Betätigungsarm gelagerte Mitnehmer das verzahnte Stellrad nicht überragen, um eine kompaktere Bauform zu erreichen.

Erfindungsgemäß wird die Aufgabe durch die kennzeichnenden Merkmale der Ansprüche 1 bzw. 2 gelöst.

Die Erfindung geht von dem Grundgedanken aus, während der Phase der Rückstellung des Antriebes (des Antriebshebels) in die Null-Punkt-Lage das Aufeinandergleiten der Verzahnungen von Antriebsrad und Rastelement und die damit verbundenen Geräusche durch solche Mittel zu vermeiden, die das betreffende Rastelement während der besagten Rückstellphase sicher aus der Gegenverzahnung herausheben.

Gemäß der Erfindung ist beidseitig der zentralen Kulissenführung, die über Nocken oder dgl. auf die Rastelemente einwirkt, ein Federbereich vorgesehen. Auch die in diesem Bereich angeordnete Feder tritt mit einem Nocken des Rastelements in Eingriff, wenn dieses durch Schwenken des Antriebshebels in Richtung des Anschlags der Kulisse, d. h. weg von der Null-Punkt-Lage des Antriebshebels, geschwenkt wird.

Dabei muß sichergestellt werden, daß beide Rastelemente ungehindert in die Gegenverzahnung des mit der Antriebsachse verbundenen Antriebsrades einrasten können. Deshalb darf die vorgesehene Feder auf den Nocken des Rastelements in der Null-Punkt-Lage keine Kraft ausüben, die den sicheren rastenden Eingriff des Rastelements gefährden würde. Erst beim Schwenken des Antriebshebels aus der Null-Punkt-Lage heraus übt die besagte Feder eine radial gerichtete Kraft auf den Nocken aus, die größer als die zweckmäßigerweise vorgesehene Kraft einer weiteren Feder ist, welche in entgegengesetzter Richtung auf die schwenkbaren Rastelemente einwirkt. Somit wird jeglicher Lehrhub vermieden.

Es wird jedoch auch sichergestellt, daß die Verzahnungen von Rastelement und Antriebsrad unter Antriebsbelastung Selbsthemmung aufweisen. Erreicht wird dies üblicherweise durch einen geeigneten Winkel zwischen dem durch das Rastelement übertragenen Kraftvektor und den Flanken der Verzahnungen. So wird das Rastelement während der Betätigung des Antriebes nicht von der Feder aus der Gegenverzahnung gedrückt; die Feder wird vom Nocken des Rastelements niedergehalten. Erst wenn keine Antriebskraft mehr auf das Rastelement einwirkt und der Antrieb in die Null-Punkt-Lage zurückgeführt wird, hebt die Feder im Bereich der Kulisse das betreffende Rastelement aus der Verzahnung des Antriebsrades heraus. Somit können die sonst üblichen Rückstellgeräuche nicht mehr auftreten.

Es liegt im Rahmen der vorliegenden Erfindung, die auf dem Umfang des Antriebsrades angeordnete Verzahnung als Innenverzahnung auszuführen und die Rastelemente innerhalb der äußeren Kontur des Antriebsrades zu lagern, ohne daß bei dieser Ausgestaltung der Erfindung notwendigerweise Federelemente vorgesehen sind, die auf die Rastelemente wirken. Durch Anordnung der Rastelemente innerhalb der äußeren Kontur des Antriebsrades erfolgt eine kompakte Bauweise und sind alle mechanisch beweglichen Bauteile geschützt angeordnet. Mit Vorteil sind dabei auch Federelemente vorgesehen.

Die Erfindung kann besonders vorteilhaft in Verbindung mit manuellen Drehantrieben eingesetzt werden, die, ausgehend von einer Null-Punkt-Lage, nur ein beschränktes Schwenkintervall in die eine oder andere Drehrichtung zulassen. In Verbindung mit einer feingliedrigen Verzahnung wird eine quasi stufenlose und geräuschlose Verstellung erreicht. Dabei kann für das Antriebsrad wahlweise eine äußere Verzahnung oder eine in einen ringförmigen Bereich eingearbeitete Innenverzahnung vorgesehen sein.

Nachfolgend wird die Erfindung anhand von Ausführungsbeispielen und den dargestellten Figuren näher erläutert. Es zeigen:
- Figur 1 -: eine schematische Darstellung der Antriebsvorrichtung mit außenliegenden Rastelementen in Null-Punkt-Lage;
- Figur 1a -: eine Prinzipdarstellung des Antriebes gemäß Figur 1 unter Belastung durch eine Antriebskraft;
- Figur 1b -: eine Prinzipdarstellung des Antriebes gemäß Figur 1 während der Rückstellbewegung in die Null-Punkt-Lage;
- Figur 2a -: eine perspektivische Darstellung des Antriebs mit Gehäusedeckel;
- Figur 2b -: eine perspektivische Darstellung des Antriebs ohne Gehäusedeckel
- Figur 2c -: eine perspektivische Darstellung des Antriebs ohne Gehäusedeckel;
- Figur 2d -: eine perspektivische Darstellung von der Seite des Ritzels;
- Figur 2e -: eine Explosivdarstellung der wesentlichen Einzelteile des Antriebs;
- Figur 3 -: eine Gehäuseplatte mit Kulisse und einstückiger Feder;
- Figur 4 -: eine Gehäuseplatte mit Kulisse und zweistückiger Feder;
- Figur 5 -: eine schematische Darstellung einer Antriebsvorrichtung mit innenliegendem Rastelement in Null-Punkt-Lage.

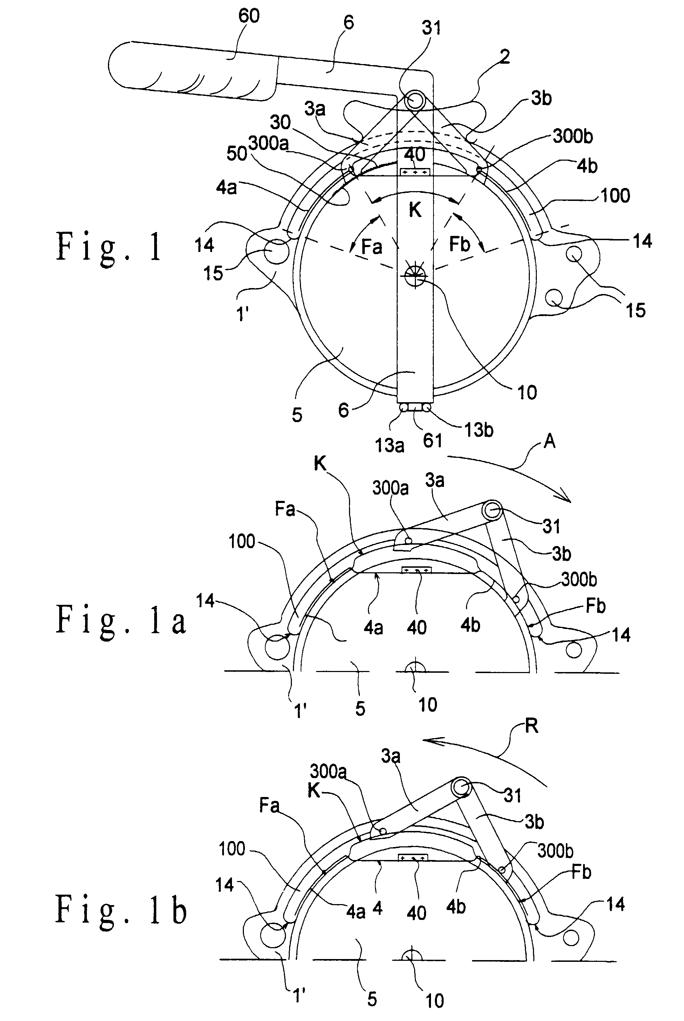

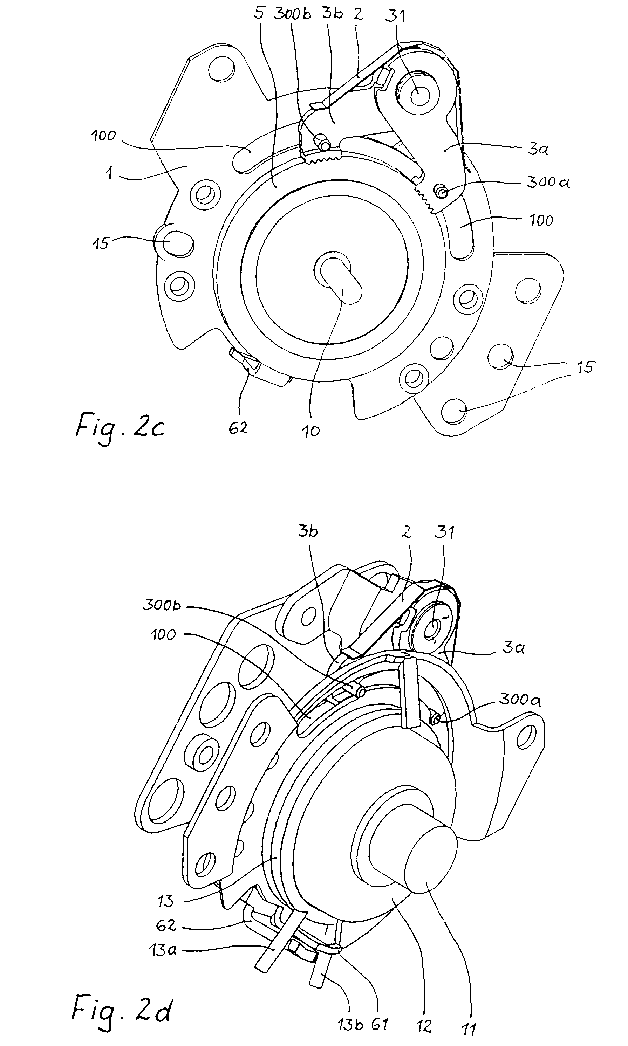

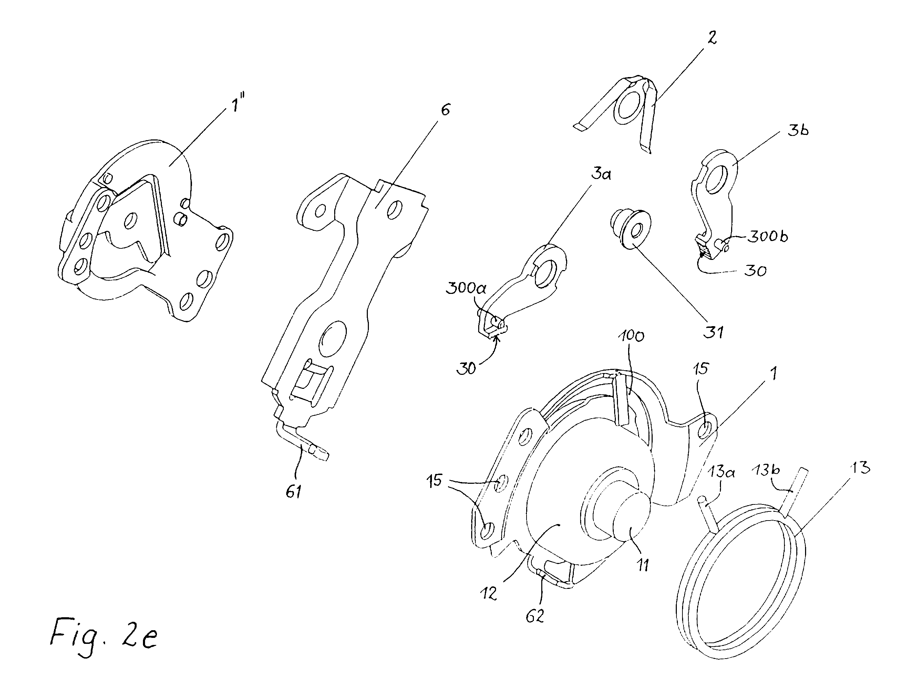

Die schematische Darstellung von Figur 1 zeigt die Frontansicht der Antriebsvorrichtung mit außenliegenden Rastelementen 3a, 3b in ihrer Null-Punkt-Lage. Sie lagern in der Schwenkachse 31 auf dem Antriebshebel 6. Ihre freien Enden sind mit einer Verzahnung 30 versehen, die mit der Außenverzahnung 50 des Antriebsrades 5 in Eingriff bringbar ist. Das Antriebsrad 5 ist starr mit der Antriebsachse 10 verbunden, die auch ein Zahnrad (Ritzel 11) trägt, das in Figur 2d schematisch dargestellt ist.

In der Gehäuseplatte 1' wurde die Kulisse 100 eingearbeitet, welche aus einem zentralen Kulissenführungsbereich K für die Nocken 300a, 300b der Rastelemente 3a, 3b sowie beiderseits angrenzenden Federbereichen Fa, Fb besteht. In diesem Bereich sind Federelemente 4a, 4b angeordnet, die ebenfalls auf die Nocken 300a, 300b einwirken können. Die Feder 4 mit ihren freien Schenkeln 4a und 4b ist an einem hier nicht dargestellten Gehäusedeckel über den Befestigungsbereich 40 arretiert.

In der Null-Punkt-Lage des Antriebs befinden sich die Nocken 300a, 300b der Rastelemente 3a, 3b exakt auf der Grenze zwischen dem Kulissenführungsbereich K und den daran angrenzenden Federbereichen Fa, Fb. In dieser sogenannten Null-Punkt-Lage werden die Nocken 300a, 300b weder von der Kulisse K noch von den Federschenkeln 4a, 4b beeinflußt. Eine auf die Rastelemente 3a, 3b gemeinsam einwirkende Feder 2 sorgt dafür, daß ihre Verzahnungen 30 in die Gegenverzahnung 50 des Antriebsrades 5 eingreifen. Damit wird sichergestellt, daß kein Leerhub im Antrieb auftreten kann, d.h., jede über den Handgriff 60 in den Antriebshebel 6 eingeleitete Antriebskraft führt unmittelbar zu einer Drehbewegung des Antriebsrades 5.

Um im Anschluß an eine Antriebsbewegung eine automatische Rückstellung des Antriebes bzw. des Antriebshebels 6 selbst in seine Null-Punkt-Lage zu gewährleisten, besitzt der Antriebshebel 6 eine über den Rand der Gehäuseplatte 1' hinausragende Verlängerung, die einen Anschlag 61 trägt. Dieser Anschlag 61 steht im Kontakt mit den Federschenkeln 13a, 13b einer vorzugsweise als Drehfeder ausgebildeten Rückholfeder.

Figur 1a zeigt eine Prinzipdarstellung des Antriebes gemäß Figur 1 während einer Antriebsbewegung in die Richtung A. Die Verzahnungen 30, 50 sind so ausgebildet, daß sie unter Einwirkung einer Antriebskraft Selbsthemmung aufweisen, d.h. die Verzahnung 30 des entsprechenden Rastelements 3b kann nicht durch den Federschenkel 4b aus der Gegenverzahnung 50 des Antriebsrades 5 herausgedrückt werden. Während dessen gleitet der Nocken 300a des Rastelements 3a auf der Kulisse K auf, wodurch seine Verzahnung 30 aus der Gegenverzahnung 50, die noch während der Null-Punkt-Lage im Eingriff gestanden haben, herausgehoben wird. Dies verhindert das Entstehen von Antriebsgeräuschen während der Übertragung einer Antriebskraft. Der Nocken 300b des antriebsseitig belasteten Rastelements 3b drückt den Federschenkel 4b solange nieder, bis der Antrieb durch die Rückstellbewegung R in seine Null-Punkt-Lage zurückgeführt wird. Beim Fehlen einer antriebsseitigen Belastung hebt der Federschenkel 4b das Rastelement 3b sofort durch seine Einwirkung auf dem Nocken 300b aus der Gegenverzahnung 50 heraus. Somit kann die Rückstellbewegung ebenfalls ohne das Entstehen von Geräuschen erfolgen (siehe hierzu Figur 1b).

Bei einer Schwenkbewegung des Antriebes in die entgegengesetzte Richtung (nicht dargestellt) würde das Rastelement 3a einer antriebsseitigen Belastung unterliegen und während der Antriebsbewegung den Federschenkel 4a niederdrücken, während der Antriebshebel 3b über seinen Nocken 300b auf die Kulisse K aufgleitet und somit von der Gegenverzahnung 50 getrennt wird. Eine Rückstellbewegung des Antriebes in Richtung seiner Null-Punkt-Lage würde, entsprechend der schon beschriebenen Variante, zu einem Ausheben des Rastelementes 30 aus der Gegenverzahnung 50 führen. Bei der Dimensionierung des Antriebes ist darauf zu achten, daß die Federkraft der Schenkel 4a, 4b die Gegenkraft der Feder 2, welche die Rastelmente auf das Antriebsrad zu drücken sucht überwunden werden kann.

Die Befestigung des Antriebes erfolgt über die Befestigungslöcher 15, beispielsweise an dem Seitenblech eines Sitzgestells, um eine manuelle Sitzverstellung zu ermöglichen.

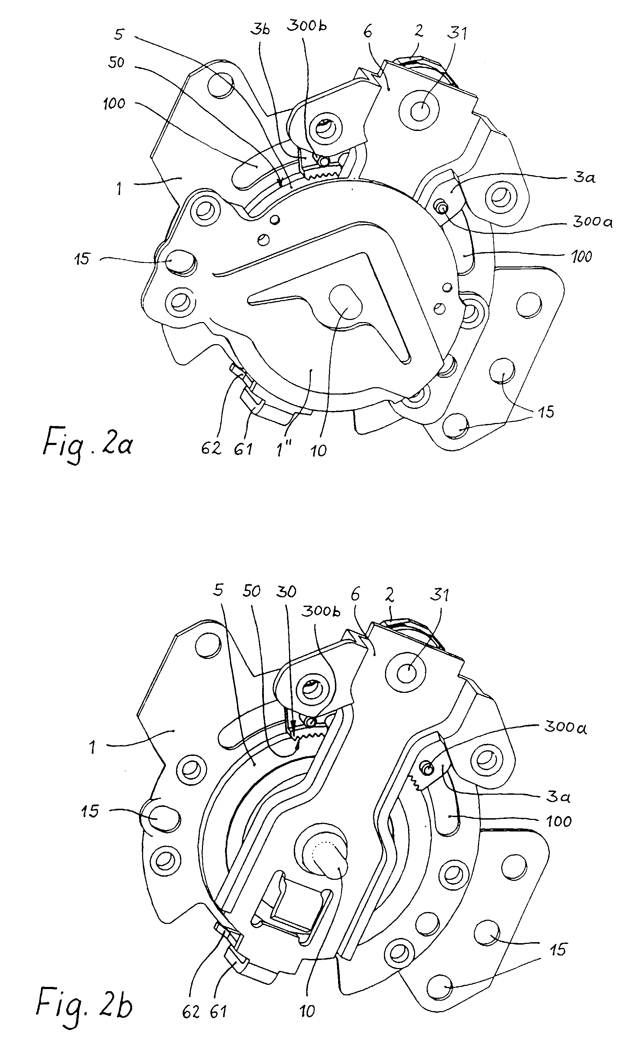

Die Figuren 2a bis 2d zeigen verschiedene perspektivische Ansichten des erfindungsgemäßen Antriebes, aus denen auch das Zusammenwirken mit einer Sperrvorrichtung erkennbar ist. Diese stufenlos wirkende reibschlüssige Sperrvorrichtung sperrt zwar sämtliche abtriebsseitigen Momentenübertragungen, ihre Sperrwirkung ist jedoch für antriebsseitige Drehmomente aufgehoben. Innerhalb des Gehäuses 12 der Sperrvorrichtung (z.B. bekannt aus DE 41 20 617) sind die entsprechenden Klemmbacken angeordnet. Abtriebsseitig steht ein Ritzel 11 in fester Verbindung mit der Antriebsachse 10. Die schon genannte schraubenförmige Rückstellfeder 13 lagert auf dem äußeren Umfang des Gehäuses 12 der Sperrvorrichtung. Ihre freien Enden 13a, 13b stehen nicht nur mit dem Anschlag 61 des Antriebshebels 6 in Verbindung, sie stützen sich auch an einem weiteren gehäusefesten Anschlag 62 ab. Je nach Schwenkrichtung des Antriebes steht immer einer der Federschenkel 13a, 13b mit dem Anschlag 61 und der andere Federschenkel 13a, 13b mit dem zweiten Anschlag 62 in Verbindung.

Eine antriebsseitige Vorderansicht des Antriebes zeigt Figur 2b. Aus ihr sind deutlich die Verlängerung des Antriebshebels 6 sowie das Antriebsrad 5 erkennbar. Figur 2a zeigt den durch einen Gehäusedeckel 1" abgeschlossenen Antrieb. Dabei trägt der Gehäusedeckel 1" die als zweiseitige Schenkelfeder 4a, 4b ausgebildete Feder mittig durch eine Schraubverbindung.

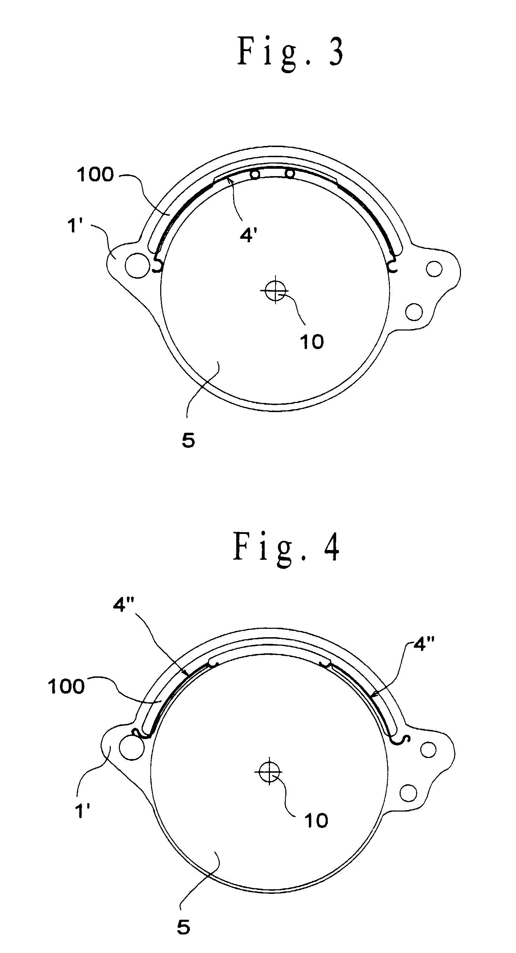

Die Figuren 3 und 4 deuten unterschiedliche Möglichkeiten der Gestaltung von erfindungsgemäßen Federbereichen im Bereich der Kulisse 100 an. Während Figur 3 eine einstückig ausgeformte Feder 4' zeigt, verwendet das Ausführungsbeispiel gemäß Figur 4 für jeden Federbereich eine separate Feder 4". In beiden Fällen sind die Federn 4', 4" mit der Gehäuseplatte 1' verbunden. Es ist vorteilhaft, die Federbereiche mittels Plattfedern zu gestalten.

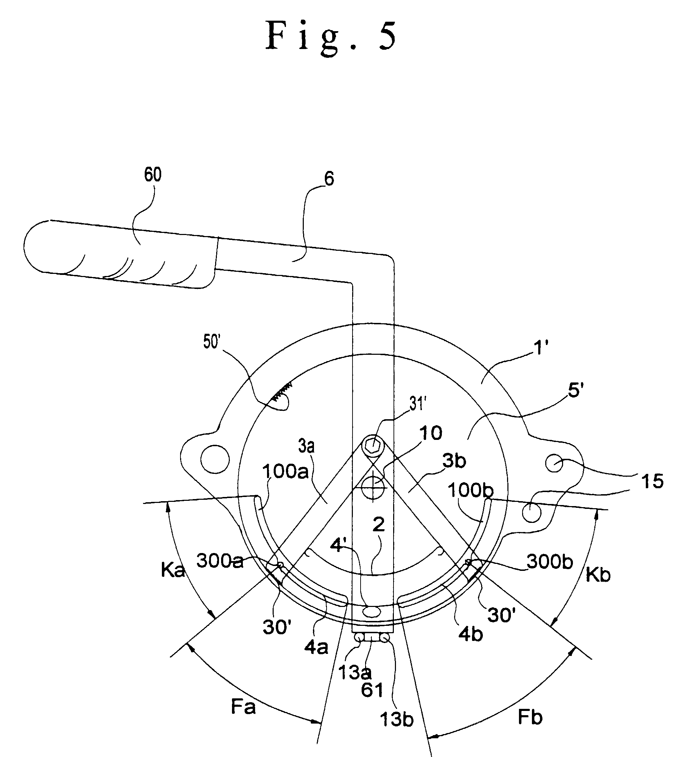

Figur 5 zeigt eine weitere Erfindungsvariante, die jedoch im wesentlichen dem Erfingdungsprinzip von Figur 1 entspricht. Der Hauptunterschied besteht darin, daß das Antriebsrad 5' eine Innenverzahnung 50' aufweist, mit der die Gegenverzahnung 30' der Rastelemente 3a, 3b in Eingriff bringbar ist. Dementsprechend sind die Rastelemente 3a, 3b innerhalb der äußeren Kontur des Antriebsrades 5' auf dem Antriebshebel 6 gelagert.

Die Darstellung zeigt den Antrieb in seiner Null-Punkt-Lage, in der die Verzahnungen 30', 50' infolge der Federkraft der Feder 2 miteinander in Eingriff stehen. Die Kulissen 100a, 100b stehen, im Gegensatz zu der Variante von Figur 1, nicht in unmittelbarer Verbindung miteinander. Sie weisen jedoch ebenfalls Kulissenbereiche Ka, Kb auf , die auf die Nocken 300a, 300b derart einwirken können, daß bei einer Schwenkbewegung des Antriebshebels 6 das nicht durch eine Antriebskraft belastete Rastelement 3a, 3b mit seiner Verzahnung 30' aus der Gegenverzahnung 50' herausgehoben wird. Die daran angrenzenden Bereiche Fa, Fb weisen Federschenkel 4a, 4b auf, die während der Rückführung des Antriebshebels in seine Null-Punkt-Lage das entsprechende Rastelement 3a, 3b von der Gegenverzahnung 50' fernhalten, so daß keine Rückführgeräusche entstehen können. Die Kulissen 100a, 100b sind vorzugsweise als Ausnehmungen (nicht explizit dargestellt) in einem Gehäusedeckel ausgebildet.

Die zuletzt beschriebene Erfindungsvariante stellt eine besonders vorteilhafte Ausführungsvariante dar, die in ihrer Kombination von federgesteuerten Rastelementen 3a, 3b mit der Anordnung der Rastelemente 3a, 3b innerhalb der Gegenverzahnung 50' des Antriebsrades 5' sowohl für einen geräuscharmen Betrieb sorgen, als auch eine kompaktere Bauweise und eine geschützte Anordnung aller mechanischen beweglichen Bauteile innerhalb eines Gehäuses ermöglichen.

### Bezugszeichenliste

- 1: Gehäuse
- 1': Gehäuseplatte mit Kulisse und Befestigungslöchern
- 1": Gehäusedeckel
- 10: Antriebsachse
- 11: Ritzel
- 12: Gehäuse der Sperrvorrichtung
- 13: Feder
- 13a: Federschenkel
- 13b: Federschenkel
- 14: Anschlag der Kulisse
- 15: Befestigungsloch
- 100: Kulisse
- 100a: Kulisse
- 100b: Kulisse

- 2: Feder (zum Andrücken der Raselemente)

- 3: Rastelemente
- 3a: Rastelemente
- 3b: Rastelemente
- 30: Verzahnung des Rastelements
- 30': Verzahnung des Rastelements
- 31: Schwenkachse des Rastelements
- 31': Schwenkachse des Rastelements
- 300: Nocken des Rastelements
- 300a: Nocken des Rastelements
- 300b: Nocken des Rastelements
- 4: Feder
- 4': Feder
- 4": Feder
- 4a: Federschenkel
- 4b: Federschenkel
- 40: Befestigungsbereich

- 5: Antriebsrad
- 5': Antriebsrad
- 50: Verzahnung des Antriebsrades
- 50': Innenverzahnung des Antriebsrades

- 6: Antriebshebel
- 60: Handgriff
- 61: Anschlag/Nase
- 62: gehäusefester Anschlag

- A: Antriebsbewegung

- F: Bereich der federelastischen Belastung des Nockens 300 durch die Feder 4 (Federbereich)

- Fa: Bereich der federelastischen Belastung des Nockens 300 durch die Feder 4 (Federbereich)

- Fb: Bereich der federelastischen Belastung des Nockens 300 durch die Feder 4 (Federbereich)

- K: Bereich der Kulissenführung des Nockens 300 (Kulissenführungsbereich)
- Ka: Bereich der Kulissenführung des Nockens 300a (Kulissenführungsbereich)

- Kb: Bereich der Kulissenführung des Nockens 300b (Kulissenführungsbereich)

- R: Rückstellbewegung

## Patentansprüche

1. Beidseitig wirkender, manueller Antrieb zur Erzeugung einer Drehbewegung, die wahlweise ausgehend von der Null-Punkt-Lage eines winkelbegrenzt schwenkbaren Antriebshebels (6) in die eine oder andere Drehrichtung erfolgt, wobei eine Antriebsachse (10) durch den Antriebshebel (6) nur solange gedreht wird, wie sich der Antriebshebel (6) von seiner Null-Punkt-Lage weg bewegt, während beim Schwenken des Antriebshebels (6) in Richtung der Null-Punkt-Lage die Antriebsachse (10) nicht mitgenommen wird, wobei der Antrieb folgenden Aufbau aufweist:
- der Antriebshebel (6) ist auf der Antriebsachse (10) gelagert und er trägt schwenkbare Rastelemente (3a, 3b), deren mit Verzahnungen (30) versehene freie Enden mit einer auf dem Umfang eines Antriebsrades (5) angeordneten Verzahnung (50) in Eingriff bringbar sind,
- dem schwenkbaren Rastelement (3a, 3b) ist eine Kulissenführung (K, Ka, Kb) zugeordnet, die - je nach Schwenkrichtung des Antriebshebels (6) - das jeweils unbelastete Rastelement von der Verzahnung (50) des Antriebsrades (5) abhebt, und
- eine Sperrvorrichtung steht mit der Antriebsachse (10) derart in Verbindung, daß zwar die abtriebsseitige Momentenübertragung gesperrt ist, jedoch die antriebsseitige Momentenübertragung die Sperrwirkung aufhebt,
**dadurch gekennzeichnet**,
daß beidseitig und außerhalb der Kulissenführung (K, Ka, Kb) sich Federbereiche (Fa, Fb) mit Federelementen (4a, 4b) anschließen, die auf die Rastelemente (3a, 3b) eine entgegen der Einrastrichtung der Verzahnungen (30, 50) gerichtete Kraft ausüben, wobei die Federkraft auf ein in Antriebsrichtung belastetes Rastelement (3a bzw. 3b) keine die Verzahnungen (30, 50) trennende Wirkung aufweist, während das in Richtung der Null-Punkt-Lage zurückzustellende unbelastete Rastelement (3b bzw. 3a) durch die Federkraft von der Verzahnung (50) des Antriebsrades (5) abgehoben wird.

2. Beidseitig wirkender, manueller Antrieb zur Erzeugung einer Drehbewegung, die wahlweise ausgehend von der Null-Punkt-Lage eines winkelbegrenzt schwenkbaren Antriebshebels (6) in die eine oder andere Drehrichtung erfolgt, wobei eine Antriebsachse (10) durch den Antriebshebel (6) nur solange gedreht wird, wie sich der Antriebshebel (6) von seiner Null-Punkt-Lage weg bewegt, während beim Schwenken des Antriebshebels (6) in Richtung der Null-Punkt-Lage die Antriebsachse (10) nicht mitgenommen wird, wobei der Antrieb folgenden Aufbau aufweist:
- der Antriebshebel (6) ist auf der Antriebsachse (10) gelagert und er trägt schwenkbare Rastelemente (3a, 3b), deren mit Verzahnungen (30') versehene freie Enden mit einer auf dem Umfang eines Antriebsrades (5') angeordneten Verzahnung (50') in Eingriff bringbar sind,
- dem schwenkbaren Rastelement (3a, 3b) ist eine Kulissenführung (K, Ka, Kb) zugeordnet, die - je nach Schwenkrichtung des Antriebshebels (6) - das jeweils unbelastete Rastelement von der Verzahnung (50') des Antriebsrades (5') abhebt, und
- eine Sperrvorrichtung steht mit der Antriebsachse (10) derart in Verbindung, daß zwar die abtriebsseitige Momentenübertragung gesperrt ist, jedoch die antriebsseitige Momentenübertragung die Sperrwirkung aufhebt,
**dadurch gekennzeichnet**,
daß die auf dem Umfang des Antriebsrades (5') angeordnete Verzahnung eine Innenverzahnung (50') ist und daß die Rastelemente (3a, 3b) auf einer Achse (31') des Antriebshebels (6) innerhalb des von der Innenverzahnung gebildeten Umfanges lagern.

3. Antrieb nach Anspruch 2, **dadurch gekennzeichnet**, daß beidseitig und außerhalb der Kulissenführung (K, Ka, Kb) sich Federbereiche (Fa, Fb) mit Federelementen (4a, 4b) anschließen, die auf die Rastelemente (3a, 3b) eine entgegen der Einrastrichtung der Verzahnungen (30', 50') gerichtete Kraft ausüben, wobei die Federkraft auf ein in Antriebsrichtung belastetes Rastelement (3a bzw. 3b) keine die Verzahnungen (30', 50') trennende Wirkung aufweist, während das in Richtung der Null-Punkt-Lage zurückzustellende unbelastete Rastelement (3b bzw. 3a) durch die Federkraft von der Verzahnung (50') des Antriebsrades (5') abgehoben wird.

4. Antrieb nach Anspruch 1 oder 3, **dadurch gekennzeichnet**, daß die Rastelemente (3a, 3b) jeweils einen Nocken (300a, 300b) oder dergleichen aufweisen, welcher in der Null-Punkt-Lage des Antriebshebels (6) auf der Grenze zwischen der Kulissenführung (K, Ka, Kb) und dem Federbereich (Fa, Fb) angeordnet ist, und sowohl mit der Kulisse (100; 100a, 100b) als auch mit einer Feder im Federbereich (Fa, Fb) in Eingriff tritt.

5. Antrieb nach Anspruch 1 oder 3, **dadurch gekennzeichnet**, daß die Federbereiche (Fa, Fb) von einer einstückigen Formfeder (4, 4') gebildet sind.

6. Antrieb nach Anspruch 5, **dadurch gekennzeichnet**, daß die Formfeder (4, 4') im mittigen Bereich am Gehäuse befestigt ist.

7. Antrieb nach Anspruch 1 oder 3, **dadurch gekennzeichnet**, daß die beiden Federbereiche (Fa, Fb) von separaten Federelementen (4") gebildet sind.

8. Antrieb nach Anspruch 1, **dadurch gekennzeichnet**, daß die Verzahnung (50) auf dem äußeren Umfang des Antriebsrades (5) vorgesehen ist und die Rastelemente (3a, 3b) auf einer äußeren Achse (31) des Antriebshebels (6) lagern.

## Claims

1. Bi-directional manual drive for generating a rotary motion which takes place selectively starting from the zero point position of a restricted angle swivel drive lever (6) in one or other rotary direction wherein a drive axis (10) is turned through the drive lever (6) only so long until the drive lever (6) is moved away from its zero point position whilst during swivelling of the drive lever (6) in the direction of the zero point position the drive axis (10) is not entrained whereby the drive has the following construction:
- the drive lever (6) is mounted on the drive axis (10) and supports swivel detent elements (3a, 3b) whose free ends which are provided with teeth (30) can be brought into engagement with teething (50) provided on the circumference of a drive wheel (5),
- a slide guide (K, Ka, Kb) is associated with the swivel detent element (3a, 3b) and - depending on the swivel direction of the drive lever (6) - lifts the relevant unloaded detent element from the teething (50) of the drive wheel (5), and
- a locking device is in connection with the drive axis (10) so that the torque transfer on the output side is indeed locked but the torque transfer on the drive side lifts the locking action,
characterised in that on both sides and outside the slide guide (K, Ka, Kb) there are spring areas (Fa, Fb) with spring elements (4a, 4b) which exert a force on the detent elements (3a, 3b) directed against the detent engagement direction of the teeth (30, 50) whereby the spring force has no action on a detent element (3a or 3b) loaded in the drive direction to separate the teeth (30, 40) whilst the unloaded detent element (3b and 3a respectively) which is to be reset in the direction of the zero point position is removed by the spring force from the teeth (50) of the drive wheel (5).

2. Bi-directional manual drive for generating a rotary motion which takes place selectively starting from the zero point position of a restricted angle swivel drive lever (6) in one or other rotary direction wherein a drive axis (10) is turned through the drive lever (6) only so long until the drive lever (6) is moved away from its zero point position whilst during swivelling of the drive lever (6) in the direction of the zero point position the drive axis (10) is not entrained whereby the drive has the following construction:
- the drive lever (6) is mounted on the drive axis (10) and supports swivel detent elements (3a, 3b) whose free ends which are provided with teeth (30') can be brought into engagement with teething (50') provided on the circumference of a drive wheel (5'),
- a slide guide (K, Ka, Kb) is associated with the swivel detent element (3a, 3b) and - depending on the swivel direction of the drive lever (6) - lifts the relevant unloaded detent element from the teething (50') of the drive wheel (5'), and
- a locking device is in connection with the drive axis (10) so that the torque transfer on the output side is indeed locked but the torque transfer on the drive side lifts the locking action,
characterised in that the teething mounted on the circumference of the drive wheel (5') is internal teething (50') and that the detent elements (3a, 3b) are mounted on an axis (31') of the drive lever (6) inside the circumference formed by the inner teething.

3. Drive according to claim 2 characterised in that on both sides and outside of the slide guide (K, KA, Kb) there are spring areas (Fa, Fb) with spring elements (4a, 4b) which exert on the detent elements (3a, 3b) a force directed against the detent engagement direction of the teething (30', 50') wherein the spring force has no action on a detent element (3a, or 3b) loaded in the drive direction to separate the teeth (30', 50') whilst the detent element (3b or 3a respectively) which is to be reset in the direction of the zero point position is removed by the spring force from the teething (50') of the drive wheel (5').

4. Drive according to claim 1 or 2 characterised in that the detent elements (3a, 3b) each have a cam (300a, 300b) or the like which is mounted in the zero point position of the drive lever (6) on the boundary between the slide guide (K, Ka, Kb) and the spring area (Fa, Fb), and enters into engagement with both the slide (100; 100a) and with a spring in the spring area (Fa, Fb).

5. Drive according to claim 1 or 3 characterised in that the spring areas (Fa, Fb) are formed by a one-piece shaped spring (4, 4').

6. Drive according to claim 5 characterised in that the shaped spring (4, 4') is fixed in the centre area on the housing.

7. Drive according to claim 1 or 3 characterised in that the two spring areas (Fa, Fb) are formed by separate spring elements (4").

8. Drive according to claim 1 characterised in that the teeth (50) are provided on the outer circumference of the drive wheel (5) and the detent elements are mounted on an outer axis (31) of the drive lever.

## Revendications

1. Mécanisme manuel d'entraînement bidirectionnel pour la génération d'un mouvement tournant qui, sélectivement en partant de la position de point 0 d'un levier d'entraînement (6) pivotant dans un angle limité, s'effectue dans un sens ou dans l'autre sens de rotation, un axe d'entraînement (10) étant mis en rotation par le levier d'entraînement (6) uniquement lorsque le levier d'entraînement (6) est déplacé en éloignement de sa position de point 0, tandis que lors du pivotement du levier d'entraînement (6) dans la direction de la position de point 0, l'axe d'entraînement (10) n'est pas emmené, le mécanisme d'entraînement présentant la structure suivante :
- le levier d'entraînement (6) est monté sur un axe d'entraînement (10) et supporte des éléments de butée pivotante (3a, 3b) dont les extrémités libres munies de dentures (30) peuvent s'engrener sur la denture disposée sur la périphérie d'une roue d'entraînement (5)
- à l'élément de butée pivotante (3a, 3b) est affecté un guidage coulissant (K, Ka, Kb) qui, selon le sens de pivotement du levier d'entraînement (6), soulève l'élément de butée respectivement non sollicité de la denture (50) de la roue d'entraînement (5)
- un dispositif de butée est en communication avec l'axe d'entraînement (10) de telle sorte que la transmission de moment sur le côté de sortie est bloquée, tandis que la transmission de moment sur le côté entraînement annule l'effet de blocage,
caractérisé en ce que
des zones de ressort (Fa, Fb) se raccordent à des éléments de ressort (4a, 4b) des deux côtés à l'extérieur du guidage coulissant (K, Ka, Kb), qui exercent sur les éléments de butée (3a, 3b) une force dirigée en opposition au sens d'engrènement de denture (30,50), la force de ressort n'exerçant aucun effet de séparation des dentures (30, 50) sur un élément de butée sollicitée dans le sens d'entraînement (3a ou 3b) tandis que l'élément de butée (3b ou 3a) non sollicité, à rappeler dans le sens de la position de point 0, est soulevé de la denture (50) de la roue d'entraînement (5) par la force de ressort.

2. Mécanisme d'entraînement manuel bi-directionnel pour la génération d'un mouvement pivotant qui facultativement en partant de la position de point 0 d'un levier d'entraînement pivotant sur un angle limité (6) s'effectue dans un sens ou dans l'autre sens de rotation, un axe d'entraînement (10) n'étant mis en rotation par le levier d'entraînement (6) que lorsque le levier d'entraînement (6) s'éloigne de la position de point 0 tandis que lors du pivotement du levier d'entraînement (6) dans la direction de point 0, l'axe d'entraînement (10) n'est pas emmené, l'entraînement présentant la structure suivante :
- le levier d'entraînement (6) est monté sur l'axe d'entraînement (10) et supporte des éléments de butée pivotante (3a, 3b) dont les extrémités libres munies de dentures (30') peuvent s'engrener sur la denture (50') disposée sur la périphérie d'une roue d'entraînement (5')
- à l'élément de butée pivotante (3a, 3b) est affecté un guidage coulissant (K, Ka, Kb) qui, selon le sens de pivotement du levier d'entraînement (6), soulève l'élément de butée respectivement non sollicité de la denture (50') de la roue d'entraînement (5') et
- un dispositif de butée est en communication avec l'axe d'entraînement (10) de telle sorte que la transmission de moment sur le côté de l'arbre de sortie est bloquée, tandis que la transmission de moment sur le côté d'entraînement annule l'effet de blocage
caractérisé en ce que, la denture disposée sur la périphérie de la roue d'entraînement (5') est une denture interne (50') et en ce que les éléments de butée (3a, 3b) sont logés sur un axe (31') du levier d'entraînement (6) à l'intérieur de la périphérie formée par la denture interne.

3. Mécanisme d'entraînement selon la revendication 2, caractérisé en ce que des deux côtés et à l'extérieur du guidage coulissant (K, Ka, Kb) se raccordent les zones de ressort (Fa, Fb) aux éléments de ressorts (4a, 4b) qui exercent une force sur les éléments de butée (3a, 3b) en opposition au sens d'engrènement des dentures (30', 50'), la force de ressort sur un élément de butée sollicité dans le sens d'entraînement (3a ou 3b) n'exerçant aucun effet de séparation sur les dentures (30', 50') tandis que l'élément de butée (3b, 3a) non sollicité en rappel dans le sens de la position de point nul est soulevé par la force de ressort de la denture (50') de la roue d'entraînement (5').

4. Mécanisme d'entraînement selon la revendication 1 ou 3, caractérisé en ce que les éléments de butée (3a, 3b) présentent respectivement une came ou élément similaire (300a, 300b) qui dans la position de point nul du levier d'entraînement (6) est disposée sur la limite entre le guidage coulissant (K, Ka, Kb) et la zone de ressort (Fa, Fb) et ainsi s'engrènent avec le coulisseau (100, 100a, 100b) et avec un ressort dans la zone de ressort (Fa, Fb).

5. Mécanisme d'entraînement selon les revendications 1 ou 3, caractérisé en ce que les zones de ressort (Fa, Fb) sont formées par un ressort de forme d'un seul tenant (4, 4').

6. Mécanisme d'entraînement selon la revendication 5, caractérisé en ce que le ressort de forme (4, 4') est fixé dans la zone médiane sur le logement.

7. Mécanisme d'entraînement selon les revendications 1 ou 3, caractérisé en ce que les deux zones de ressort (Fa, Fb) sont formées par des éléments de ressorts séparés (4").

8. Mécanisme d'entraînement selon la revendication 1, caractérisé en ce que la denture (50) est prévue sur la périphérie extérieure de la roue d'entraînement (5) et les éléments de butée (3a, 3b) sont montés sur un axe extérieur (31) du levier d'entraînement (6).
